# EUROPÄISCHE PATENTSCHRIFT

(11) **EP 1 995 136 B1**
(45) Veröffentlichungstag und Bekanntmachung des Hinweises auf die Patenterteilung: **28.04.2010**
(21) Anmeldenummer: 08008821.4
(22) Anmeldetag: 13.05.2008
(51) Int. Cl.: B60T 8/1755

(54) **Fahrerassistenzsystem und Verfahren zur Verbesserung des Lenkverhaltens eines Kraftfahrzeuges**
Driver assistance system and method to improve the steering behaviour of a motor vehicle
Système d'assistance du conducteur et procédé d'amélioration du rapport de conduite d'un véhicule automobile

(30) Priorität: 25.05.2007 DE 102007024491
(43) Veröffentlichungstag der Anmeldung: 26.11.2008
(73) Patentinhaber: VOLKSWAGEN AG, 38436 Wolfsburg (DE)
(72) Erfinder: Giebel, Tobias, 38442 Wolfsburg (DE)

(56) Entgegenhaltungen:
- EP-A- 1 225 109
- DE-A1- 10 226 227
- US-A1- 2006 006 734

## Beschreibung

Die Erfindung betrifft ein Fahrerassistenzsystem und ein Verfahren zur Verbesserung des Lenkverhaltens eines Kraftfahrzeuges.

Es sind Fahrerassistenzsysteme bekannt, die die Fahrzeugstabilität verbessern. Ein Beispiel hierfür sind elektrische Stabilitätsprogramme, die bei einem Schleudern des Fahrzeuges durch gezielte Bremseingriffe das Fahrzeug wieder stabilisieren. Dabei steigt zu Beginn des Schleuderns der Schräglaufwinkel an den Fahrzeugrädern sprunghaft an, weist also einen starken positiven Gradienten auf.

Aus der DE 199 23 012 A1 ist eine Lenkvorrichtung für ein Kraftfahrzeug mit lenkbaren Rädern bekannt, mit einem von einem Fahrer gegen die Wirkung einer Lenkkraft bzw. eines Lenkmomentes betätigbaren Lenkorgan, mindestens einem auf die lenkbaren Räder wirkenden, von einer elektronischen Steuereinrichtung beeinflussbaren Aktuator für den Einschlagwinkel der lenkbaren Räder, wobei eine Einrichtung zur Ermittlung eines an den lenkbaren Rädern auftretenden Querschlupfs vorgesehen ist, in der Steuereinrichtung ein oberer Grenzwert für den Querschlupf ermittelbar ist und mindestens ein Mittel vorgesehen ist, welches dazu dient, einer weiteren Vergrößerung des Einschlagwinkels entgegenzuw rken, wenn der ermittelte Querschlupf größer ist als der obere Grenzwert. Als Maß für den auftretenden Querschlupf kann beispielsweise der Schräglaufwinkel verwendet werden. Dieser kann in der elektronischen Steuereinrichtung aus bei in Fahrzeugen mit elektrischer Fahrdynamikregelung ohnehin vorhandenen Signalen eines Gierratensensors, von Radstellungssensoren und der Fahrzeuggeschwindigkeit berechnet werden. Der Grenzwert für den Querschlupf ist im einfachsten Fall ein vorgebbarer Festwert, der in der Steuereinrichtung gespeichert ist. Es ist jedoch auch möglich, den Grenzwert dynamisch abhängig von Fahrzustandsparametern, wie Geschwindigkeit, zu ermitteln. Ist der tatsächlich auftretende Que schlupf bzw: der Schräglaufwinkel größer als der obere Grenzwert, wird darauf geschlossen, dass eine Fehlreaktion des Fahrers vorliegt, der zu weit einlenkt. Für diesen Fall ist mindestens ein Mittel vorgesehen, welches dazu dient, einer weiteren Vergrößerung das Einschlagwinkels entgegenzuwirken.

Ein Problem, dass durch herkömmliche Fahrerassistenzsysteme nicht gelöst wird, ist das Gleiten entlang einer Fahrbahnkante. Ist beispielsweise ein Fahrzeug von der Fahrbahn abgekommen, so versucht der Fahrer typischerweise durch Einlonken über die Fahrbahnkante zurück auf die Fahrbahn zu gelangen. Je nach Beschaffenheit der Fahrbahnkante kann es nun aber geschehen, dass bei einem kleinen Lenkwinkel dies nicht gelingt, sondern das Fahrzeug weiter geradeaus fährt und an der Fahrbahnkante entlang gleitet. Es baut sich daher ein Schräglaufwinkel auf. Erst wenn dann der Lenkwinkel ausreichelid groß ist, fährt das Fahrzeug über die Fahrbahnkante. Dabei kann es nun passieren, dass der eingestellte Lenkwinkel relativ groß ist, sich also zuvor ein größerer Schräglaufwinkel eingestellt hat, der dann für die Fahrstabilität problematisch werden kann, wenn das Fahrzeug w eder auf die Fahrbahn fährt. Ähnliche Situationen entstehen, wenn ein Fahrer eine Spurrille ir der Fahrbahndecke verlassen will.

Ein Fahrerassistenzsystem bzw.- verfahren gemäß dem Oberbegriff der unabhängigen Ansprüche 1 und 3 ist aus dem Dokument DE 10 226 227 bekannt.

Der Erfindung liegt das technische Problem zugrunde, ein Fahrei assistenzsystem und ein Verfahren zur Verbesserung des Lenkverhaltens eines Kraftfahrzeugs zu schaffen, mittels derer bei vergleichbarer Fahrsicherheit ein komfortableres Fahren möglich ist.

Die Lösung des technischen Problems-ergibt sich durch die Gegenstände mit den Merkmalen der Patentansprüche 1 und 3. Weitere vorteilhafte Ausgestaltungen der Erfindung ergeben sich aus den Unteransprüchen.

Hierzu umfasst das Fahrerassistenzsystem ein Steuergerät, das aus den Signalen von Sensoren einen Schräglaufwinkel von lenkbaren Fahrzeugrädern ermittelt oder übermittelt bekommt, wobei das Fahrerassistenzsystem Steuersignale für mindestens eine Brems-Aktuatorik erzeugt, wobei bei Erfassung eines Schräglaufwinkels über die Steuersignale ein Bremseingriff erfolgt, der das Fahrzeug in Richtung des eingeschlagenen Lenkwinkels dreht. Der gezielte Bremseingriff unterstützt dabei den Lenkwunsch des Fahrers und reduziert den aufgebauten Schräglaufwinkel. Dies verbessert auch das Lenkverhalten nach Wiederauffahren auf die Fahrbahn, da der Fahrer nur den von ihm eingestellten Lenkwinkel korrigieren muss, um ein Einfahren in eine benachbarte Fahrspur zu verhindern. Dabei sei angemerkt, dass anstelle des Schräglaufwinkels auch eine zum Schräglaufwinkel in Beziehung stehende Größe wie beispielsweise der Querschlupf verwendet werden kann.

In einer bevorzugten Ausführungsform wird ein Bremseingriff nurvorgenommen, wenn der Schräglaufwinkel und/oder der Gradient des Schräglaufwinkels einen Schwellwert unterschreitet. Hierdurch kann zwischen Eingriffen aufgrund eines Schleuderns und einer Hilfe beim Wiederauffahren unterschieden werden.

In einer weiteren bevorzugten Ausführungsform ist das Fahreraesistenzsystem als elektronisches Stabilitätsprogramm ausgebildet.

Vorzugsweise ist allen Rädern des Fahrzeugs eine Brems-Aktuatorik zugeordnet, mindestens aber zwei Rädern an verschiedenen Fahrzeugseiten, beispielsweise den beiden Hinterrädern.

Die Erfindung wird nachfolgend anhand eines bevorzugten Ausführungsbeispieles näher erläutert. Die Fig. zeigen:
- Fig. 1a: eine schematische Darstellung einer Verkehrssituation mit dem Versuch eines Wiederauffahrens auf die Straße,
- Fig. 1b: eine schematische Darstellung der Verkehrssituation bei Greifen der Fahrzeugräder,
- Fig. 2: einen schematischen Verlauf des Schräglaufwinkels über der Zeit für eine Verkehrssituation gemäß den Fig. 1a, b (Stand der Technik) und
- Fig. 3: einen schematischen Verlauf des Schräglaufwinkels beim Schleudern (Stand der Technik).

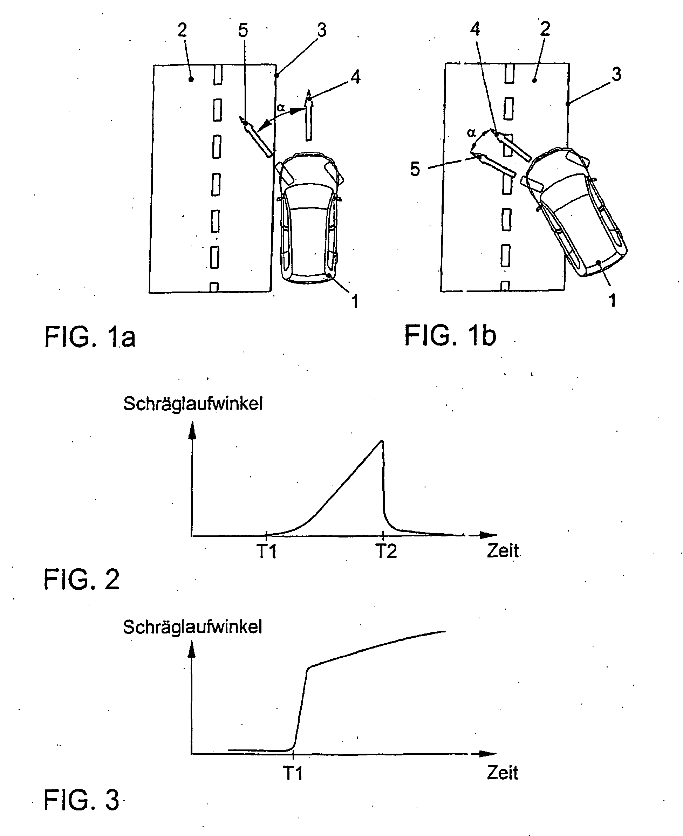

In den Fig. 1a und b ist eine Verkehrssituation dargestellt, die sich wie folgt beschreiben lässt. Ein Fahrzeug 1 ist von der Fahrbahn 2 abgekommen. Der Fahrer versucht, durch ein Lenkmanöver das Fahrzeug 1 auf die Asphaltfläche zu lenken. Es gelingt ihm jedoch nicht, das Fahrzeug über die Fahrbahnkante 3 zu fahren, solange er nur einen kleinen Lenkwinkel anlegt. Das Fahrzeug 1 gleitet an der Fahrbahnkante 3 entlang und fährt weiter geradeaus (gekennzeichnet durch Pfeil 4), obwohl ein Lenkwinkel anliegt (Pfeil 5), d.h. es hat einen großen Schräglaufwinkel α. Der Schräglaufwinkel ist der Winkel zwischer der Schnittlinie der Radmittenebene und Fahrbahnebene einerseits und der Projektion des Geschwindigkeitsvektors der Radmitte auf die Fahrbahn andererseits. Sollte das Fahrzeug 1 plötzlich, z.B. aufgrund einer Unebenheit der Fahrbahnkante 3, auf die Fahrbahn 2 gelangen, wird es unmittelbar dem Lenkwinkel folgen (siehe Fig. 1 b). In diesem Fall kann es aufgrund der plötzlichen Schräglaufwinkeländerung zu einem starken Lenkmanöver kommen, der das Fahrzeug 1 weit auf die Fahrbahn 2 führt oder sogar auf die Gegenfahrbahn. Dieses Fahrmanöver kann man auch als Übersteuern bezeichnen. Ähnlche Situationen entstehen, wenn ein Fahrer eine Spurrinne in der Fahrbahndecke verlasser will.

In der Fig. 2 ist der zeitliche Verlauf des Schräglaufwinkels für eine Verkehrssituation gemäß den Fig. 1a, b dargestellt. T1 beschreibt den Zeitpunkt, an dem der Fahrer die Wiederauffahrt auf die Fahrbahn startet. Da das Fahrzeug aber an der Fahrbahnkante .entlang gleitet und nicht den Fahrereingaben folgt, baut sich mit wachsendem Lenkwinkel ein Schräglaufwinkel auf. Beim und nach dem Wiederauffahren auf die Fahrbahn zum Zeitpunkt T2 folgt das Fahrzeug dem vom Fahrer eingestellten Lenkwinkel, d.h. der Schräglaufwinkel reduziert sich sprunghaft, weist also einen großen negativen Gradienten auf.

In der Fig. 3 ist zum Vergleich der Verlauf des Schräglaufwinkels in einer Schleudersituation dargestellt, die zum Zeitpunkt T1 beginnt und der Schräglaufwinkel sprunghaft nach oben steigt, also einen großen positiven Gradienten aufweist.

Zurück zur Fig. 1a bzw. Fig. 2. Erfindungsgemäß wird nun der Aufbau des Schräglaufwinkels α erfasst und entsprechend ein Steuersignal für einen Bremseingriff durch ein Steuergerät eines Fahrerassistenzsystems, vorzugsweise eines elektronischen Stabilitätsprogramms, erzeugt. In dem dargestellten Beispiel in Fig. 1 wird hierzu das linke Hinterrad (das Hinterrad, das dichter am Fahrbahnrand 3 ist) abgebremst, so dass das Fahrzeug 1 in Richtung des Lenkwinkels gedreht wird. Um nun eine Verkehrssituation nach Fig. 1a von einem Schleudern zu unterscheiden, wird vorzugsweise auch der Gradient des Schräglaufwinkels α ausgewertet. Bei sehr großen Gradienten wird daher auf Schleudern, bei kleineren Gradienten auf eine Fahrbahnkantenproblematik geschlossen. Des Weiteren erfolgt der Bremseingriff nur, wenn ein unterer Schwellwert für den Schräglaufwinkel α überschritten wird und ein oberer Sachwellwert unterschritten wird, letzteres um wieder ein Schleudern zu erkennen. Erfindungsgemäß wird also ein zu großer Aufbau eines Schräglaufwinkels α durch den Bremseingriff verhindert. Sobald das Fahrzeug 1 über die Fahrbahnkante 3 fährt, wird der Bremseingriff zurückgenommen, wobei das Überschreiten der Fahrbahnkante durch einen Einbruch des Schräglaufwinkels α erfassbar ist. Gegebenenfalls erfolgen dann andere Bremseingriffe, um den Fahrer beim Geradeziehen des Fahrzeugs zu unterstützen.

## Patentansprüche

1. Fahrerassistenzsystem, umfassend ein Steuergerät, das aus den Signalen von Sensoren einen Schräglaufwinkel von lenkbaren Fahrzeugrädern ermittelt oder übermittelt bekommt, wobei das Fahrerassistenzsystem Steuersignale für mindestens eine Brems-Aktuatorik erzeugt, wobei bei Erfassung eines Schräglaufwinkels (α) über die Steuersignale ein Bremseingriff erfolgt, der das Fahrzeug in Richtung des eingeschlagenen Lenkwinkels dreht, **dadurch gekennzeichnet dass** ein Bremseingriff nur vorgenommen wird, wenn der Schräglaufwinkel (α) einen unteren Schwellwert überschreitet und einen oberen Schwellwert unterschreitet und der Gradient des Schräglaufwinkels einen Schwellwert unterschreitet.

2. Fahrerassistenzsystem nach Anspruch 1, **dadurch gekennzeichnet, dass** das Fahrerassistenzsystem als elektronisches Stabilitätsprogramm ausgebildet ist.

3. Verfahren zur Verbesserung des Lenkverhaltens eines Kraftfahrzeuges, mittels eines Steuergerätes, das aus den Signalen von Sensoren einen Schräglaufwinkel von lenkbaren Fahrzeugrädern ermittelt oder übermittelt bekommt, wobei das Fahrerassistenzsystem Steuersignale für mindestens eine Brems-Aktuatorik erzeugt, wobei bei Erfassung eines Schräglaufwinkels (α) über die Steuersignale ein Bremseingriff erfolgt, der das Fahrzeug in Richtung des eingeschlagenen Lenkwinkels dreht, **dadurch gekennzeichnet, dass** der Bremseingriff nur vorgenommen wird, wenn der Schräglaufwinkel (α) einen unteren Schwellwert überschreitet und einen oberen Schwellwert unterschreitet und der Gradient des Schräglaufwinkels einen Schwellwert unterschreitet.

4. Verfahren nach Anspruch 3, **dadurch gekennzeichnet, dass** das Fahrerassistenzsystem als elektronisches Stabilitätsprogramm ausgebildet ist.

## Claims

1. Driver assistance system, comprising a control unit which determines a slip angle of steerable vehicle wheels from the signals of sensors, or has said slip angle transmitted to it, wherein the driver assistance system generates control signals for at least one brake actuator system, wherein, when a slip angle (α) is obtained, a braking intervention is carried out by means of the control signals, which braking intervention turns the vehicle in the direction of the adopted steering angle, **characterized in that** a braking intervention is performed if the slip angle (α) exceeds a lower threshold value and undershoots an upper threshold value and the gradient of the slip angle undershoots a threshold value.

2. Driver assistance system according to Claim 1,
**characterized in that** the driver assistance system is embodied as an electronic stability program.

3. Method for improving the steering behaviour of a motor vehicle by means of a control unit which determines a slip angle of steerable vehicle wheels from the signals of sensors, or has said slip angle transmitted to it, wherein the driver assistance system generates control signals for at least one brake actuator system, wherein, when a slip angle (α) is obtained, a braking intervention is carried out by means of the control signals, which braking intervention turns the vehicle in the direction of the adopted steering angle, **characterized in that** the braking intervention is performed if the slip angle (α) exceeds a lower threshold value and undershoots a upper threshold value and the gradient of the slip angle undershoots a threshold value.

4. Method according to Claim 3, **characterized in that** the driver assistance system is embodied as an electronic stability programme.

## Revendications

1. Système d'assistance au conducteur, comprenant un module de commande qui détermine à partir des signaux de capteurs ou se fait communiquer un angle de dérive des roues orientables du véhicule, le système d'assistance au conducteur générant des signaux de commande pour au moins un mécanisme d'actionnement des freins, une intervention de freinage ayant lieu en cas de détection d'un angle de dérive (α) par le biais des signaux de commande, laquelle fait tourner le véhicule dans la direction de l'angle de braquage de la direction, **caractérisé en ce qu'**une intervention de freinage a lieu lorsque l'angle de dérive (α) est supérieur à une valeur de seuil basse et inférieur à une valeur de seuil haute et le gradient de l'angle de dérive est inférieur à une valeur de seuil.

2. Système d'assistance au conducteur selon la revendication 1, **caractérisé en ce que** le système d'assistance au conducteur est réalisé sous la forme d'un programme de stabilité électronique.

3. Procédé pour améliorer le comportement de la direction d'un véhicule automobile au moyen d'un module de commande qui détermine à partir des signaux de capteurs ou se fait communiquer un angle de dérive des roues orientables du véhicule, le système d'assistance au conducteur générant des signaux de commande pour au moins un mécanisme d'actionnement des freins, une intervention de freinage ayant lieu en cas de détection d'un angle de dérive (α) par le biais des signaux de commande, laquelle fait tourner le véhicule dans la direction de l'angle de braquage de la direction, **caractérisé en ce qu'**une intervention de freinage a lieu lorsque l'angle de dérive (α) est supérieur à une valeur de seuil basse et inférieur à une valeur de seuil haute et le gradient de l'angle de dérive est inférieur à une valeur de seuil.

4. Procédé selon la revendication 3, **caractérisé en ce que** le système d'assistance au conducteur est réalisé sous la forme d'un programme de stabilité électronique.
